Europäisches Patentamt

(19) European Patent Office

Office européen des brevets

(11) Numéro de publication: **0 044 780**
**B1**

(12) **FASCICULE DE BREVET EUROPEEN**

(45) Date de publication du fascicule du brevet:
16.10.85

(51) Int. Cl.⁴: **H 04 L 7/10**, H 04 L 7/04

(21) Numéro de dépôt: **81401136.7**

(22) Date de dépôt: **16.07.81**

(54) **Système de transmission de données numériques sur canal à débit continu.**

(30) Priorité: **18.07.80 FR 8016296**

(43) Date de publication de la demande:
**27.01.82 Bulletin 82/4**

(45) Mention de la délivrance du brevet:
**16.10.85 Bulletin 85/42**

(84) Etats contractants désignés:
**BE DE FR GB NL**

(56) Documents cités:
**FR - A - 1 287 014**
**FR - A - 1 390 008**
**FR - A - 2 313 825**
**FR - A - 2 444 370**
**US - A - 3 950 616**

**IBM TECHNICAL DISCLOSURE BULLETIN, vol. 12, no. 8,
janvier 1970, NEW YORK (US), R.R. EBERHARDT:
"Double synchronism of a message, page 1320
NTZ, vol. 27, no. 12, 1974, BRAUNSCHWEIG (DE), H.
MÜLLER: "Bit sequence independence through
scramblers in digital communication systems", pages
475-479**

(73) Titulaire: **L'Etat Français représenté par le Secrétaire
d'Etat aux Postes et Télécommunications et à la
Télédiffusion, (Centre National d'Etudes des
Télécommunications) 38-40 rue du Général Leclerc,
F-92131 Issy-les-Moulineaux (FR)**
Titulaire: **Etablissement Public de Diffusion dit
"Télédiffusion de France", 21-27 rue Barbès,
F-92120 Montrouge (FR)**

(72) Inventeur: **Blineau, Joseph, 65, rue de l'Alma,
F-35100 Rennes (FR)**
Inventeur: **Pommier, Daniel, Groupe Scolaire,
F-35510 Mordelles (FR)**
Inventeur: **Thomas, Claude, Lotissement du Vert Village,
F-35250 Chasne sur Illet (FR)**

(74) Mandataire: **Le Guen, Louis François, Cabinet Louis Le
Guen 1, avenue Edouard VII B.P. 91, F-35802 Dinard
Cédex (FR)**

## Description

La présente invention concerne un système de transmission de paquets de données numériques ordonnées en octets sur un canal à débit continu et, plus particulièrement prévues pour être radiodiffusées par satellites et/ou par réseaux terrestres. Plus généralement, le système peut être utilisé avec tout support de transmission et/ou d'enregistrement.

L'émission d'informations sonores sous forme numérique et l'émission de données numériques destinées à des services divers, utilisant les moyens de la radiodiffusion par satellite ou les réseaux de diffusion terrestres constituent un nouveau service de diffusion qui conduit à prévoir un nouveau système de diffusion, dont la mise en œuvre ne doit pas perturber le fonctionnement des récepteurs existants et ceci, jusqu'à leur remplacement complet par des récepteurs à de nouvelles normes.

Certains de ces nouveaux services requièrent des canaux à forte capacité, notamment pour la transmission, sous forme numérique, d'au moins quatre voies «son» de haute qualité monophonique, ou de toute autre combinaison équivalente de sons de qualités diverses de haute qualité stéréophonique ou monophonique. D'autres services ne nécessitent que des canaux de débit moindre, notamment pour la transmission de données relatives au télétexte, au sous-titrage, à la télécopie, etc. En pratique, on est donc conduit à prévoir un canal de capacité de l'ordre de 2 Mbit/s et une procédure de multiplexage simple et souple des différents services utilisant le canal.

Pour un tel canal, on connaît bien deux types de structures: premièrement, les canaux à débit continu transmettant les multiplex sur les réseaux numériques et plus particulièrement les multiplex du niveau TN1 à 2,048 Mbit/s définis par l'avis G732 du CCITT; deuxièmement, les canaux à transmission par paquets. Ces deux structures présentent des avantages et des inconvénients dans les applications à la diffusion. Elles ont un avantage commun qui est celui d'avoir subi des tests et celui d'avoir été exploitées depuis plusieurs années.

Les canaux à débits continus, bien connus dans le domaine des transmissions, sont utilisés pour la transmission de signaux sonores. La capacité de tel canaux à 2,048 Mbit/s est de cinq à six voies de haute qualité monophonique, selon le codage utilisé. Ils présentent deux inconvénients. D'une part, ils n'assurent aisément que le multiplexage de signaux à débits particuliers multiples de 64 kbit/s. D'autre part, le débit minimal d'insertion directe sans création d'un nouveau niveau de multiplexage est de 64 kbit/s.

La diffusion par paquets présente les avantages suivants. Elle est simple à mettre en œuvre. Elle permet aisément l'insertion de canaux asynchrones. Elle n'impose pas de valeurs particulières aux débits incidents et, notamment, aucune limite inférieure à ceux-ci. Le multiplexage étant basé sur l'identification des paquets diffusés, le récepteur effectue l'opération de démultiplexage très simplement. Le partage de la ressource est programmable et évolutif sans imposer de contraintes au récepteur. Le démultiplexage et la liaison avec les terminaux peuvent être réalisés en utilisant des circuits intégrés.

Par contre, la diffusion par paquets présente les inconvénients suivants. La procédure de sélection des paquets à la réception entraîne, quand les signaux sont dégradés, la perte de paquets qui se traduit par une dégradation majeure de la qualité du service. L'expérience a montré que le taux de perte de paquets est généralement faible en diffusion par satellite, comme en diffusion terrestre, dans les conditions habituelles de propagation. Néanmoins, un tel phénomène, lorsqu'il se produit, ne doit pas entraîner une dégradation sensible du service. C'est pourquoi l'utilisation d'une telle procédure en diffusion sonore limite la capacité utile d'un canal de 2,048 Mbit/s à l'équivalent de quatre sons de haute qualité monophonique.

Dans les systèmes connus de transmission de paquets de données sur porteuse continue, les données sont transmises à un modulateur qui insère dans le flux de données des signaux spécifiques de début et de fin de bloc de transmission qui sont utilisés dans le démodulateur pour assurer son fonctionnement correct, c'est à dire pour éventuellement y restaurer la porteuse et notamment pour y régénérer l'horloge des éléments binaires. Si l'on considère le cas général d'un modulateur transparent, ces signaux spécifiques sont émis indépendamment de la structure en paquets du flux de données. Autrement dit, ces signaux spécifiques peuvent se trouver au milieu d'un paquet et entre deux signaux spécifiques il peut y avoir plusieurs paquets. Dans la pratique, en cas de mauvaise transmission, la perte à la réception de paquets complets entraîne moins de perturbations que la mutilation de paquet.

Un objet de la présente invention consiste à prévoir un système de transmission évitant les inconvénients mentionnés ci-dessus et dans lequel les paquets de données sont émis périodiquement.

Un tel système est décrit dans le brevet FR-A-2 444 370, où il est prévu un signal numérique formé de blocs ayant chacun un signal de synchronisation (SI) suivi d'un champ de données (CD). Dans ce brevet, chaque champ de données (CD) n'est pas un paquet complet de données, au sens courant du terme, c'est-à-dire que le champ ne comporte pas d'en-tête et n'est apparemment pas ordonné en multiplet.

On connaît déjà un système de transmission par paquets qui sert à diffuser des données dans un canal de télévision. Un tel système est notamment décrit dans le brevet FR-A-2 313 825.

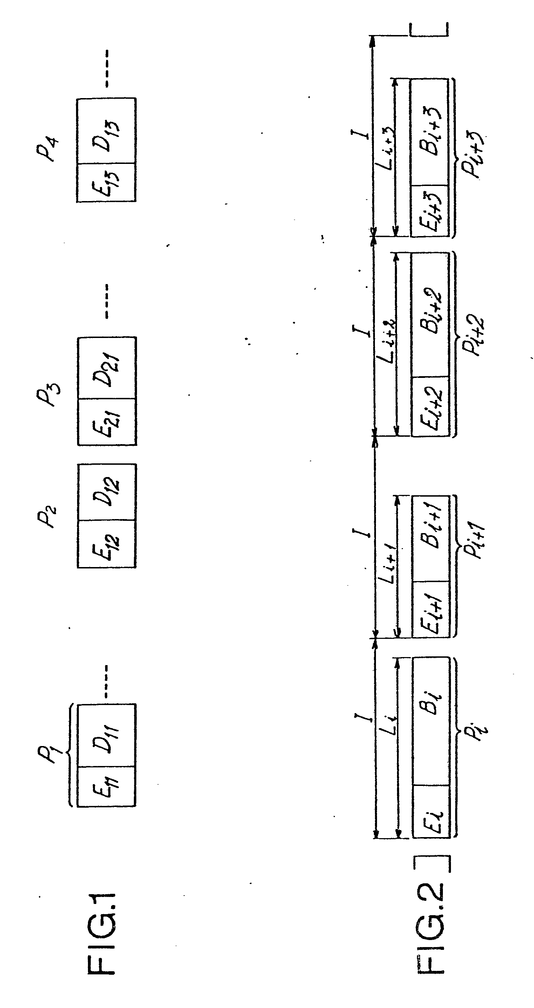

A la Fig. 1, on a montré une suite de paquets de données P1 à P4, etc., qui sont conformes à la structure des paquets décrits dans le brevet français 2 313 825. Chaque paquet Pi comprend un en-tête Ekj et un bloc de données Dkj, avec i représentant le numéro du paquet diffusé par le système, k le numéro de la source d'information et j le numéro du paquet émis par une source. Dans chaque en-tête et chaque bloc, les informations sont groupées en octets. L'en-tête comprend les huit premiers octets du paquet et le bloc de données peut comporter jusqu'à 32 octets au maximum, dans le standard de télévision français.

Dans l'en-tête, les deux octets 1 et 2 sont réservés à la synchronisation «éléments binaires» du paquet et se composent chacun de la séquence d'éléments binaires 10101010; l'octet 3 est réservé à la synchronisation «octets» du paquet et correspond à la séquence 11100111; les octets 4, 5 et 6 sont réservés à l'identification du service, c'est à dire de la source; l'octet 7 constitue l'indice du paquet et permet à l'équipement de réception de reconnaître si un paquet d'un message a été perdu; enfin, l'octet 8 indique le format du bloc de données du paquet, c'est à dire la longueur du bloc de données sous la forme du numéro du dernier octet ayant une signification.

Chaque paquet de la Fig. 1 est porté par une ligne d'image de télévision d'un canal de télévision. Les paquets peuvent être transmis sur toutes les lignes d'image du canal de télévision ou seulement sur quelques unes, comme cela est bien connu.

Autrement dit, la diffusion de données par paquets du système décrit dans le brevet FR-A-2 313 825 utilise un multiplexage par répartition dans le temps que l'on peut décomposer en deux niveaux. Comme le montre la Fig. 1, il y a un multiplexage des données provenant de plusieurs sources, dont chacune est repérée par le contenu des octets 4 à 6, ce qui crée autant de voies numériques que de sources. Les paquets sont insérés dans toutes les lignes du canal ou seulement dans quelques unes. Bien entendu, les lignes de télévision portant des données numériques ne sont pas visibles sur l'écran du récepteur.

Dans le système du brevet FR-A-2 313 825, comme le montrent les Figs 1 et 6 accompagnant la description de ce brevet, les circuits de réception comprennent un récepteur de télévision qui transmet, par sa sortie vidéo, les signaux vidéo à l'équipement de traitement de données proprement dit, lequel comprend un démodulateur (ou partie démodulation 61) et un démultiplexeur (ou partie logique 62). Le démodulateur extrait le multiplex numérique du signal vidéo et délivre au démultiplexeur les données numériques DS en série et l'horloge d'éléments binaires HD convenablement phasée. Il comprend aussi une mémoire de motif de synchronisation octet, un registre à décalage et un comparateur délivrant un signal de validation VAL indiquant au multiplexeur la présence d'un paquet de données dans la ligne traitée. Le démultiplexeur sélectionne, à partir des informations des en-têtes, une voie numérique et délivre les données utiles à un circuit d'utilisation.

Il faut noter que, dans ce système connu, le début de chaque paquet est précédé par le signal de synchronisation ligne du signal de télévision. Il n'y a donc pas d'ambiguïté sur l'identification des premiers octets de chaque paquet.

Un objet de l'invention consiste à prévoir un système de transmission sur un support de transmission continu, par opposition au signal de télévision qui est un support à impulsions, dans lequel on utilise une organisation des paquets analogues à celle du brevet FR-A-2 313 825 et une modulation adaptée au support de transmission.

L'objet de l'invention mentionné ci-dessus, ainsi que d'autres, sont atteints par la mise en œuvre du système défini dans la partie caractérisante de la revendication principale.

Dans le système suivant l'invention, la structure des blocs de transmissions étant identique à celle des paquets du brevet FR-A-2 313 825, chaque récepteur comporte également un démodulateur, adapté par exemple à la modulation MSK utilisée et fournissant les signaux DS, HD et VAL, et un démultiplexeur tel que décrit dans le brevet FR-A-2 313 825. Dans la suite, on distinguera, dans le démodulateur, les circuits de démodulation proprement dits et l'adaptateur qui fournit les signaux DS, HD et VAL.

Le rôle principal de l'adaptateur consiste à détecter le motif de synchronisation devant chaque en-tête de paquet, ce motif étant constitué par l'octet de synchronisation «élément-binaire» et l'octet de synchronisation «octet» et à délivrer le signal VAL.

En pratique, le motif de synchronisation sert de référence temporelle pour le traitement des paquets. Autrement dit, le motif de synchronisation remplace le signal de synchronisation de ligne du signal de télévision du système décrit dans le brevet FR-A-2 313 825. Il faut noter que l'octet de synchronisation «octet» ne peut constituer à lui seul le motif de synchronisation car il pourrait être confondu avec un autre octet du bloc de données ou de l'en-tête.

La confusion avec un octet du champ de données n'est pas trop gênante. En effet, la nature changeante des données évite une fausse synchronisation permanente. Par contre, une telle confusion avec un octet de l'en-tête peut fausser entièrement la communication. En effet, dans un en-tête, les données sont beaucoup moins changeantes que dans le bloc, en particulier dans le cas d'un multiplex réduit à une ou quelques voies numériques. Dans une suite de deux octets du code de Hamming, il suffit de choisir indépendamment les quatre derniers éléments binaires du premier octet et les quatre premiers éléments binaires du second octet pour reconstruire l'octet de synchronisation et donc provoquer cette confusion. Certaines configurations d'identificateurs X, Y, Z provoquent de fausses synchronisations qui peuvent demeurer stables.

Suivant l'invention, on prévoit d'utiliser, au lieu de l'octet de synchronisation «octet» seul, une séquence de 16 éléments binaires comprenant le dernier octet de synchronisation «élément binaire» suivi de l'octet de synchronisation «octet». Pour que de fausses synchronisations ne puissent se produire dans l'en-tête de paquet, on a examiné toutes les configurations des triplets d'octets de synchronisation compatibles, représentés en notation hexadécimale par E7, 21, B4 et E7, 2D, 84. Chaque motif de synchronisation, composé de l'octet 10101010 suivi de l'octet de synchronisation, a été successivement comparé aux 16 premières configurations obtenues par décalage de la séquence de 32 éléments binaires composée des:

– trois derniers éléments binaires de l'octet de synchronisation, directs ou inversés,

– seize configurations pour chacun des trois octets suivants appartenant au code de Hamming, soit en hexadécimal:
A8, 40, 92, 7A, 26, CE, 1C, F4, OB, E3, 31, D9, 85, 6D, BF, 57

– cinq éléments binaires choisis de façon quelconque pour constituer trente deux configurations.

Dans le tableau ci-après, on a indiqué les listes des séquences qui pouvaient conduire à au moins une égalité avec la séquence recherchée. Aucune égalité n'a été observée pour les octets B4 et 2D.

Pour qu'un octet soit inutilisable dans le motif de synchronisation, il suffit qu'il se produise au moins une égalité avec le dernier octet nul. En effet, dans ce cas, l'égalité est rencontrée dans les trois premiers octets et l'emploi de certaines configurations d'adresses peut conduire à une mauvaise synchronisation de paquet.

Ainsi, les octets 21 et 84 ne sont pas utilisables. Par contre, les octets E7, B4 et 2D le sont. Associés à un octet de synchronisation «élément binaire», ils peuvent être utilisés comme motif de synchronisation.

| E7 | | 21 | | 84 | |
|---|---|---|---|---|---|
| Direct | Inverse | Direct | Inverse | Direct | Inverse |
| A8855738 | A8855738 | 92A88500 | A885A800 | A87AA840 | A87AA840 |
| A86D5738 | A86D5738 | 7AA88500 | A8854000 | 407AA840 | 407AA840 |
| 40855738 | 40855738 | 26A88500 | A8859200 | 927AA840 | 927AA840 |
| 406D5738 | 406D5738 | CEA88500 | A8857A00 | 7AA84000 | 7AA84000 |
| 92855738 | 92855738 | | A8852600 | 7A7AA840 | 7A7AA840 |
| 926D5738 | 926D5738 | | A885CE00 | 267AA840 | 267AA840 |
| 7A855738 | 7A855738 | | A8851000 | CE7AA840 | CE7AA840 |
| 7A6D5738 | 7A6D5738 | | A885F400 | 1C7AA840 | 1C7AA840 |
| 26855738 | 26855738 | | A885B00 | F47AA840 | F47AA840 |
| 266D5738 | 266D5738 | | A885E300 | B7AA840 | B7AA840 |
| CE855738 | CE855738 | | A8853100 | E37AA840 | E37AA840 |
| CE6D5738 | CE6D5738 | | A885D900 | 317AA840 | 317AA840 |
| 1C855738 | 1C855738 | | A8858500 | D97AA840 | D97AA840 |
| 1C6D5738 | 1C6D5738 | | A8856D00 | 857AA840 | 857AA840 |
| F4855738 | F4855738 | | A885BF00 | 6D7AA840 | 6D7AA840 |
| F46D5738 | F46D5738 | | A8855700 | BF7AA840 | BF7AA840 |
| B855738 | B855738 | | 92A88500 | 577AA840 | 577AA840 |
| B6D5738 | B6D5738 | | 7AA88500 | | |
| E3855738 | E3855738 | | 26A88500 | | |
| E36D5738 | E36D5738 | | CEA88500 | | |
| 31855738 | 31855738 | | | | |
| 316D5738 | 316D5738 | | | | |
| D9855738 | D9855738 | | | | |
| D96D5738 | D96D5738 | | | | |
| 85855738 | 85855738 | | | | |
| 856D5738 | 856D5738 | | | | |
| 6D855738 | 6D855738 | | | | |
| 6D6D5738 | 6D6D5738 | | | | |
| BF855738 | BF855738 | | | | |
| BF6D5738 | BF6D5738 | | | | |
| 57855738 | 57855738 | | | | |
| 576D5738 | 576D5738 | | | | |

Pour certaines catégories de démodulateurs, comme les démodulateurs différentiels ou les démodulateurs cohérents, une ambiguïté de signe apparaît systématiquement sur le signal démodulé. Dans les systèmes connus, on utilise, pour lever cette ambiguïté, un codage particulier. Suivant une caractéristique de l'invention, pour lever l'ambiguïté de signe, le signe de l'octet de synchronisation «octet» est détecté et utilisé pour, selon la valeur du signe détecté, inverser ou non les polarités des données dans le récepteur.

Des combinaisons de moyens utilisées dans un récepteur utilisable avec le système suivant l'invention sont décrites dans les parties caractérisantes des revendications 3 à 7.

Par ailleurs, on a constaté que, dans la transmission sur porteuse des paquets de données, des erreurs à la démodulation peuvent se produire quand les données à transmettre présentent des structures particulières, telles que, par exemple, en l'absence de transition binaire, pour des suites de données se traduisant par des émissions consécutives de sauts de phase de 90°, pour des configurations binaires périodiques, etc. En effet, dans ces conditions, le spectre du signal transmis ne couvre pas uniformément la bande de fréquences du canal de transmission et, au contraire, il se compose d'un ensemble de raies, ce qui perturbe la régénération de la porteuse, les circuits de régénération ayant tendance à s'accrocher sur une raie, puis sur une autre et ainsi de suite.

Il est connu – voir l'ouvrage TELEINFORMATIQUE par C. Macchi et J.-F. Guilbert, paru chez Dunod en 1979, pages 55 et 56, paragraphe «Brouillage» – pour éviter la transmission d'un signal à spectre de raies, de procéder, à l'émission, à une addition modulo-2 du train binaire des données utiles et d'une séquence pseudo-aléatoire et, à la réception, de procéder à une autre addition modulo-2 du train reçus et d'une séquence pseudo-aléatoire identique à la première.

Dans la suite, au lieu de brouillage, on appelera cette opération d'addition modulo-2 un «brassage des données», quand elle est effectuée à l'émission, et un «débrassage des données», quand elle est effectuée à la réception.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 est un diagramme schématique montrant, en fonction du temps, une succession de paquets du système connu du brevet FR-A-2 313 825,

la Fig. 2 est un diagramme schématique montrant une succession, dans le temps, de blocs de transmission, suivant le système de l'invention,

la Fig. 3 est un bloc-diagramme d'un équipement d'émission utilisable dans le système suivant l'invention, associé à un système connu d'après le brevet FR-A-2 313 825,

la Fig. 4 est le bloc-diagramme d'un équipement de réception utilisable dans le système suivant l'invention, associé à un système connu d'après le brevet FR-A-2 313 825,

la Fig. 5 est le schéma de l'adaptateur de la Fig. 4,

la Fig. 6 montre des formes d'ondes illustrant le fonctionnement de l'adaptateur de la Fig. 5,

les Figs 7 et 8 sont des blocs-diagrammes de variantes des équipements d'émission et de réception des Figs 3 et 4,

la Fig. 9 est le schéma d'un exemple de réalisation de l'adaptateur de la Fig. 8, et

la Fig. 10 est un organigramme illustrant le fonctionnement de l'adaptateur de la Fig. 9.

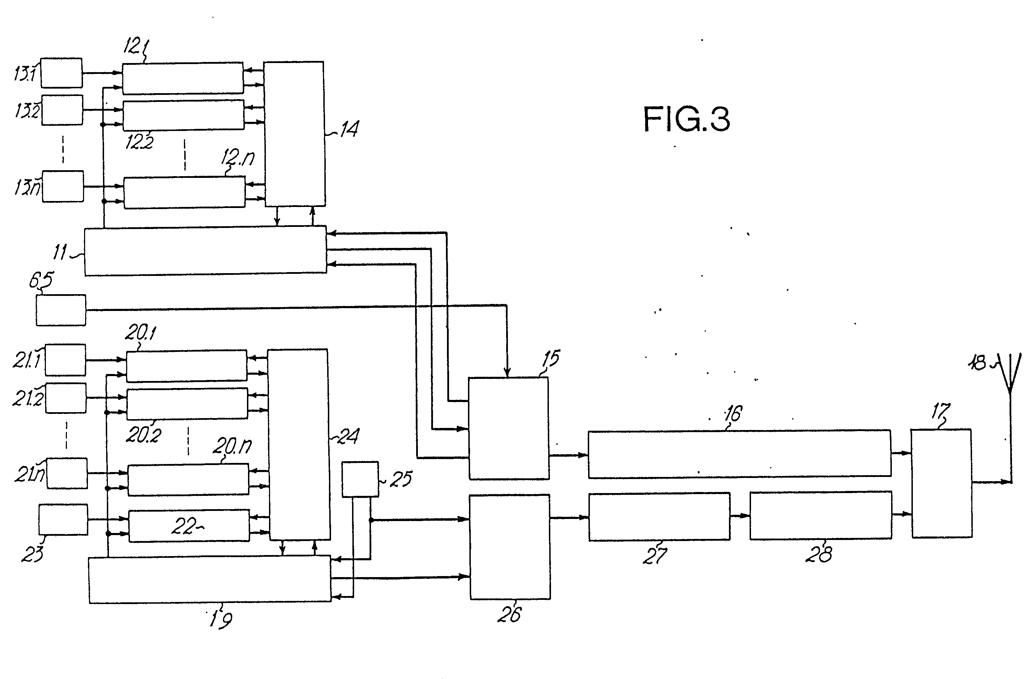

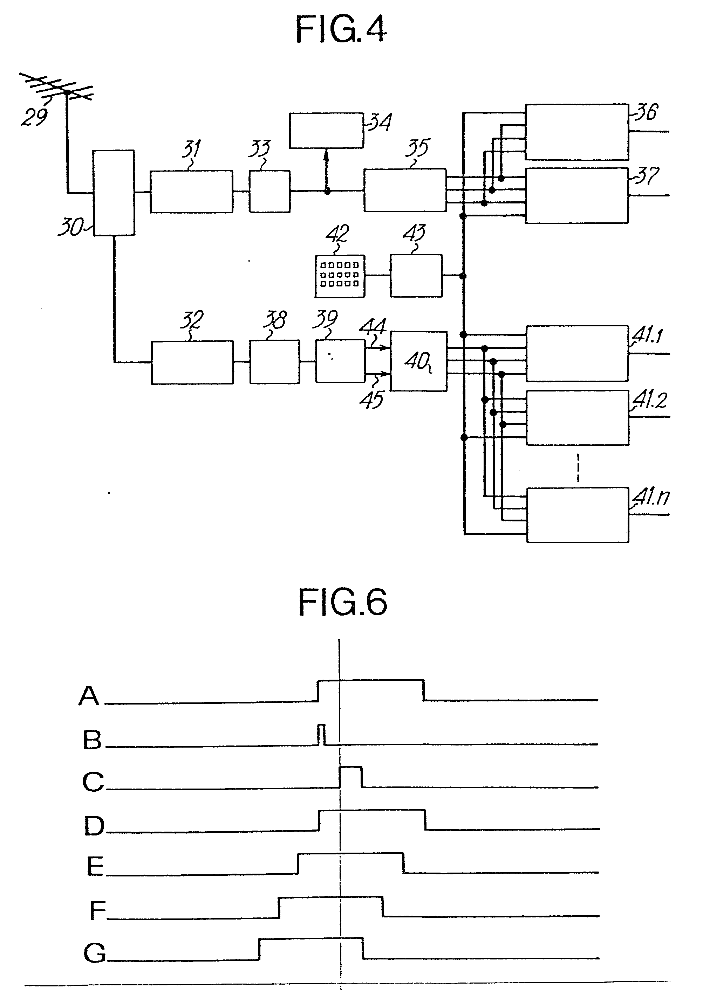

L'équipement d'émission de la Fig. 3 comprend un gérant 11, une pluralité de coupleurs 12.1 à 12.n alimentés à partir d'une pluralité de sources 13.1 à 13.n, un interface 14, un circuit 15, un émetteur 16, un coupleur d'antenne 17 et une antenne 18. Tous ces équipements peuvent être strictement identiques à ceux qui sont décrits dans les Figs 3 et 4 du brevet FR-A-2 313 825.

L'équipement de la Fig. 3 comprend encore un gérant 19, une pluralité de coupleurs 20.1 à 20.n alimentés par une pluralité de sources 21.1 à 21.n, un coupleur 22 alimenté par une source 23, un interface 24, une base de temps 25, un modulateur 26, un transposeur de fréquence 27, un amplificateur 28 dont la sortie est reliée à une entrée du coupleur 17.

La modulation effectuée dans le modulateur 26 est une modulation du type MSK et le modulateur 26 peut être du type du modulateur décrit dans le brevet FR-A-2 428 345 intitulé «Modulateur pour modulation cohérente par déplacement de fréquence d'indice 1/2 avec continuité de la phase du signal modulé». La fréquence de la porteuse peut être de 10 MHz environ. Cette porteuse est transposée à la fréquence d'émission de l'émetteur 16 par le transposeur 27 et amplifiée en puissance dans l'amplificateur 28.

Les circuits 26, 27 et 28 sont considérés comme connus et ne seront pas décrits en détail.

Le circuit 15 a une entrée reliée à une source de signaux d'image de télévision 65.

La source 23 est un générateur de signaux de bourrage. Il est constitué par une mémoire qui contient une séquence fixe d'éléments binaires, laquelle est choisie en fonction de la modulation utilisée de façon à faciliter la récupération d'horloge d'éléments binaires.

La base de temps 25 délivre les signaux d'horloge d'éléments binaires au gérant 18, vers 24 et les coupleurs, et au modulateur 26. Elle délivre également au gérant 18 le signal périodique de période I de début de bloc de transmission.

L'équipement de réception de la Fig. 4 comprend une antenne 29 reliée à l'entrée d'un circuit de changement de fréquence 30 comportant deux sorties dont la première est reliée à l'entrée d'un amplificateur de fréquence intermédiaire 31 et la seconde à l'entrée d'un amplificateur de son 32. La sortie de l'amplificateur 31 est reliée à l'entrée d'un détecteur 33 dont la sortie vidéo est reliée, d'une part, à un circuit de décodage et de visualisation 34 et, d'autre part, à un démodulateur 35 dont la sortie est reliée en parallèle aux entrées de démultiplexeurs 36 et 37. Le démodulateur 35 et les démultiplexeurs 36 et 37 forment ensemble un équipement de réception tel que décrit dans le brevet FR-A-2 313 825. Les démultiplexeurs 36 et 37 peuvent être associés à des organes, non montrés, tels que des terminaux ANTIOPE et EPEOS.

La sortie de l'amplificateur 32 est reliée à l'entrée d'un détecteur 38 dont la sortie son est reliée à l'entrée d'un démodulateur numérique 39, qui délivre le signal d'horloge d'éléments binaires et les données.

La sortie du démodulateur 39 est reliée à l'entrée d'un adaptateur 40 dont la sortie est reliée, en parallèle, aux entrées correspondantes de démultiplexeurs 41.1 à 41.n, lesquels peuvent être également associés à des terminaux ANTIOPE et EPEOS, ou encore des terminaux sonores.

L'équipement de réception de la Fig. 4 comprend encore un clavier 42, à la disposition de l'utilisateur, dont la sortie est reliée à l'entrée d'un circuit de commande 43 dont la sortie est reliée aux entrées de commande des démultiplexeurs 36, 37 et 41.1 à 41.n.

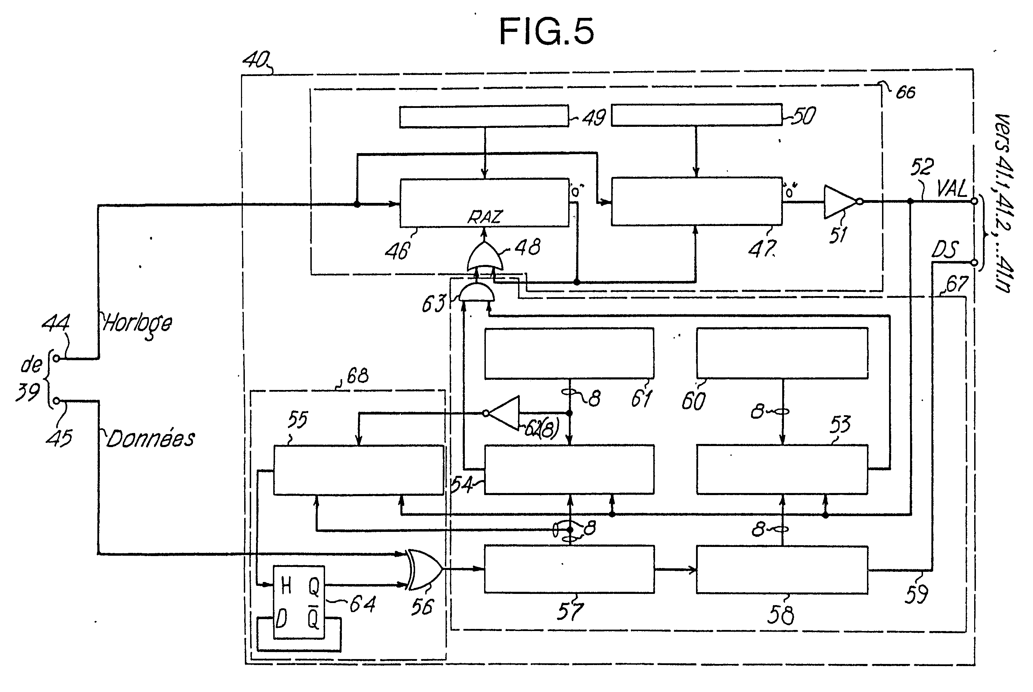

Le démodulateur de signaux MSK 39 comprend, en pratique, deux sorties 44 et 45, la première délivrant un signal à la fréquence d'horloge du train binaire et la seconde délivrant le train binaire des données. Comme le montre le schéma détaillé de la Fig. 5, la sortie 44 de 39 est reliée, en parallèle aux entrées d'horloge de deux compteurs 46 et 47, montés en décompteurs. La sortie «0» du compteur 46 est reliée, d'une part, à l'entrée de chargement du compteur 47 et, d'autre part, à une entrée d'une porte OU 48 à deux entrées. Les entrées parallèles du compteur 46 sont reliées aux sorties parallèles d'une mémoire 49 contenant, exprimée en nombre d'impulsions d'horloge, la période I, diminuée d'une unité. Les entrées parallèles du compteur 47 sont reliées aux sorties parallèles d'une mémoire 50 contenant la valeur de n impulsions. La sortie «0» du compteur 47 est reliée à l'entrée d'un inverseur 51 dont la sortie est reliée, d'une part, par le fil 52, aux entrées de validation des démultiplexeurs 41.1 à 41.n et, d'autre part, aux entrées de validation de comparateurs 53, 54 et 55.

La sortie 45 de 39 est reliée à une entrée d'une porte OU-exclusif 56 dont la sortie est reliée à l'entrée d'un registre à décalage 57 dont la sortie est reliée à l'entrée d'un registre à décalage 58 dont la sortie est reliée par le fil 59, en parallèle, aux entrées de données des démultiplexeurs 41.1 à 41.n. Le registre 57 a une capacité d'un octet, comme le registre 58. Les huit sorties parallèles du registre 58 sont reliées aux huit premières entrées parallèles du comparateur 53. Les huit sorties parallèles du registre 57 sont reliées aux huit premières entrées des comparateurs 54 et 55, respectivement. Les huit secondes entrées du comparateur 53 sont reliées aux huit sorties d'une mémoire d'octet 60. Les huit secondes entrées du comparateur 54 sont reliées aux sorties d'une mémoire d'octet 61 et les huit secondes entrées du comparateur 55 sont reliées aux sorties de huit inverseurs 62 dont les entrées sont respectivement reliées aux sorties de la mémoire 61.

La sortie du comparateur 53 est reliée à une entrée d'une porte ET à deux entrées 63 dont la seconde entrée est reliée à la sortie du comparateur 54 et dont la sortie est reliée à la seconde entrée de la porte OU 48. La sortie du comparateur 55 est reliée à l'entrée «H» d'une bascule D 64 dont la sortie Q est reliée à la seconde entrée de la porte OU-exclusif 56 et dont la sortie Q̄ est reliée à son entrée «D».

La sortie de la porte OU 48 est reliée à l'entrée de commande de chargement du compteur 46.

Si l'on considère que la période d'émission des blocs de transmission est égale à I impulsions d'horloge, le compteur 46 est donc prévu pour décompter cycliquement de (I–1) à zéro, à moins qu'il ne soit rechargé plus tôt par la sortie de 48.

Le compteur 47 est prévu pour compter cycliquement $n$ impulsions, soit par exemple $2^2$ impulsions.

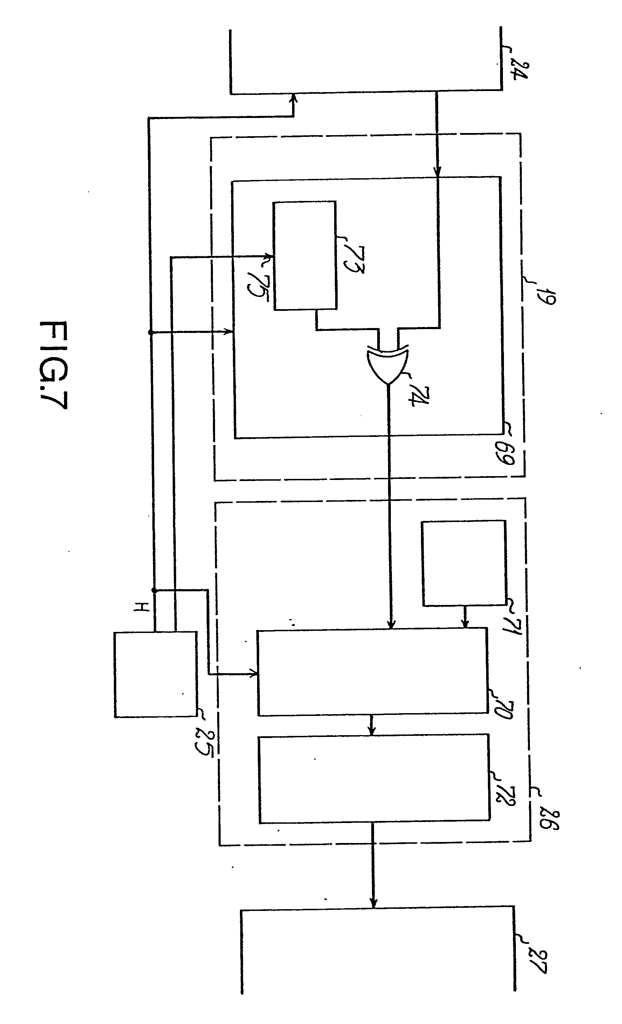

A la Fig. 6, on a représenté en A la forme d'onde du signal de sortie de l'inverseur 51 et qui constitue le signal de validation VAL. En pratique, la sortie du compteur 47 est au niveau «1» tant que ce compteur décompte, ce qui indique que le signal VAL a une largeur égale à $n$ impulsions. A la Fig. 6, en B, on a représenté le signal de sortie du compteur 46, lequel est en avance sur le début de chaque période puisque le compteur ne compte que I–1 impulsions. A la Fig. 6, en C on a représenté la forme d'onde du signal de sortie de la porte ET 63. Pour obtenir ce signal C, il faut que les sorties respectives des comparateurs 53 et 54 coïncident en indiquant une comparaison positive, ce qui a lieu quand les deux octets du motif de synchronisation sont reconnus simultanément dans 53 et 54. Il en résulte que, quand le motif de synchronisation est reconnu juste après le signal B, le compteur 46 est de nouveau remis à zéro. Il apparaît donc que, quand la synchronisation est assurée normalement, le compteur 46 émet un signal de sortie vers 47 toutes les I impulsions.

En D, à la Fig. 6, on a représenté le signal VAL émis à la période suivant l'émission du signal A, en supposant que l'on a reconnu correctement le motif de synchronisation. Le signal D est donc identique au signal A. On suppose qu'au cours de la nouvelle période, on n'a pas la coïncidence attendue dans 53 et 54. Comme la Fig. 6 le montre en E, le signal VAL suivant est alors en avance d'une impulsion par rapport au signal A. En F et G, on a supposé que le motif de synchronisation n'était pas non plus reconnu au bloc de transmission précédent respectif, ce qui entraîne un glissement en avance d'une impulsion à chaque période. Si la coïncidence se retrouve avant que le signal VAL n'ait glissé de $n$ impulsions, on retrouve l'état des signaux A, B et C. Dans le cas contraire, elle s'effectue au bout d'un bloc de transmission.

On pourrait montrer que la largeur $n$ de la fenêtre du signal VAL peut être déterminée en fonction d'une probabilité donnée de désynchronisation en un temps déterminé.

Si l'octet correspondant à l'octet de synchronisation «octet», mais avec polarité inverse, apparaît dans le registre 57, alors que le signal VAL est émis par 47, à travers 51, le comparateur 55 délivre un signal de comparaison positive qui est appliqué à l'entrée H de la bascule 64 dont la sortie Q change d'état. Il en résulte qu'à la sortie de la porte OU-exclusif 56, on a une inversion de polarité. Cette inversion de polarité permet d'espérer une comparaison positive au début de la période suivante.

Dans l'adaptateur de la Fig. 5, on peut distinguer un circuit 66 servant à la récupération de la synchronisation de bloc de transmission et fonctionnant comme une boucle de verrouillage numérique, un circuit 67 servant à la lecture du motif de synchronisation du bloc de transmission, et un circuit de levée d'ambiguïté 68. Le circuit 66 comprend les décompteurs 46 et 47, la porte OU 48, les mémoires 49 et 50, et l'inverseur 51. Le circuit 67 comprend les comparateurs 53 et 54, les registres à décalage 57 et 58, les mémoires 60 et 61, et la porte ET 63. Le circuit 68 comprend le comparateur 55, l'inverseur 62, la bascule 64 et la porte OU-exclusif 56.

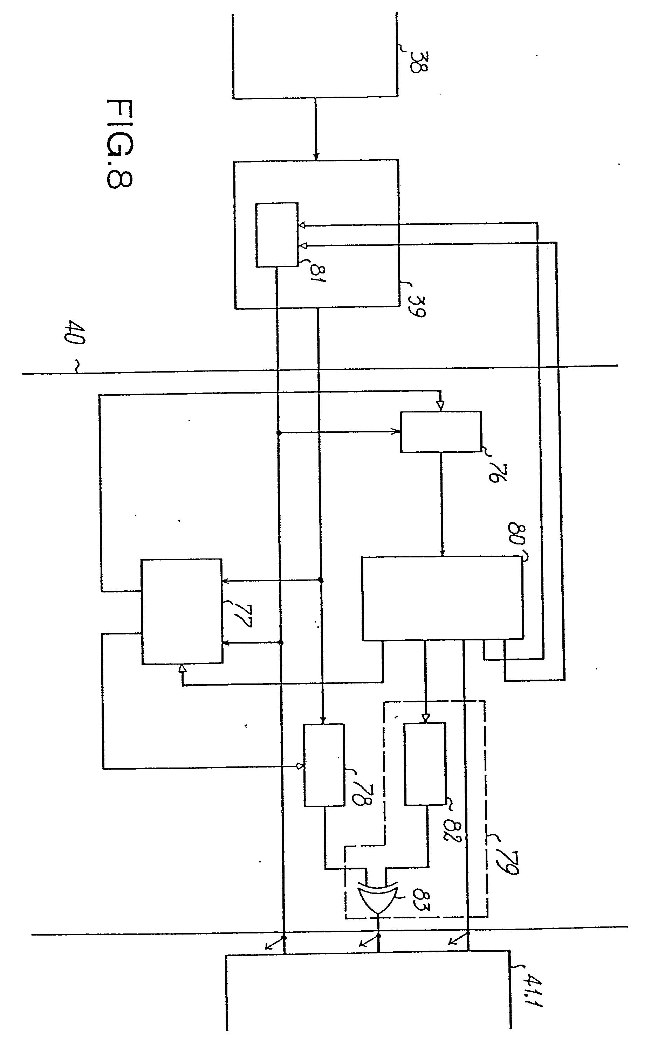

Dans l'équipement d'émission de la Fig. 3, on a supposé implicitement que les paquets étaient délivrés bruts par les coupleurs 20.1 à 20.n et 22, puis transmis, sans modification par le gérant 19, au modulateur 26, où le motif de synchronisation de bloc de transmission est inséré devant chaque paquet pour former des blocs de transmission. A la Fig. 7, on a montré une variante de cet équipement de transmission dans laquelle, dans le gérant 19 est prévu un circuit 69 effectuant un brassage binaire et dont l'entrée de données est reliée à la sortie de données de l'interface 24 et la sortie de données à une entrée de données d'un circuit de modulation binaire à signal 70 du modulateur 26. Une autre entrée du circuit 70 est reliée à la sortie d'un circuit 71 qui délivre le motif de synchronisation de bloc de transmission. La sortie du circuit de modulation 70 est reliée à l'entrée d'un circuit de réduction de spectre de puissance 72 dont la sortie est reliée au transposeur de fréquence 27. La base de temps 25 délivre les signaux d'horloge nécessaires au fonctionnement de tous ces circuits. En pratique, le circuit de brassage 69 comprend un générateur de séquence pseudo-aléatoire 73 et une porte OU-exclusif 74 dont une entrée est reliée à la sortie 24 et l'autre entrée à la sortie du générateur 73, et dont la sortie est reliée à l'entrée correspondante de 70. Le générateur 73 fonctionne avec un polynome $(x^9 + x^4 + 1)$ et délivre une séquence de longueur supérieure à celle d'un paquet. Le générateur 73 a une entrée de déclenchement 75 reliée à une sortie de la base de temps 25.

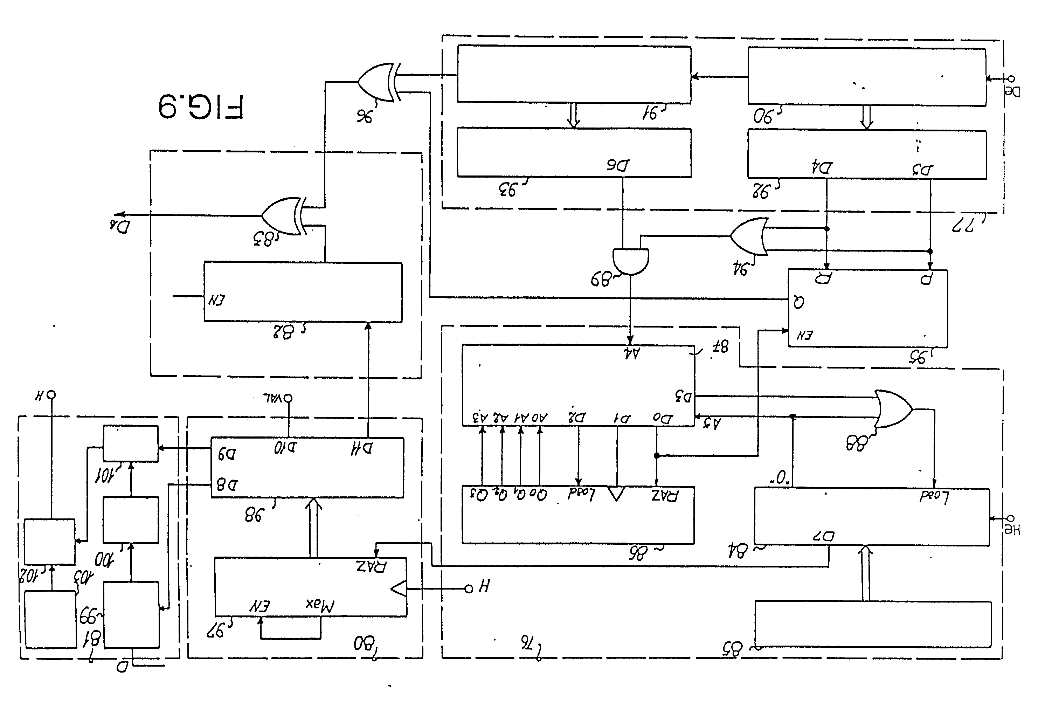

L'équipement de réception de la Fig. 8 est prévu pour recevoir des blocs de transmission traités par les circuits de la Fig. 7. On y retrouve le détecteur 38, le démodulateur 39, l'adaptateur 40 et un des démultiplexeurs 41.1 à 41.n. L'adaptateur 40 comprend un circuit 76 servant à la récupération de la synchronisation de bloc de transmission et fonctionnant en boucle de verrouillage numérique, un circuit 77 servant à la lecture du motif de synchronisation de bloc de transmission, un circuit de levée d'ambiguïté 78, un circuit de débrassage 79 et un circuit de base de temps 80. Dans le démodulateur 39, on a également fait figurer le circuit 81 servant à récupération de la synchronisation des éléments binaires. Le circuit de débrassage 79 comprend un générateur de séquence aléatoire 82, identique au générateur 73 de la Fig. 7, et une porte OU-exclusif 83 dont une entrée est reliée à la sortie du générateur 82 et l'autre entrée à la sortie du circuit de levée d'ambiguïté 78 et dont la sortie délivre les paquets de données aux démultiplexeurs.

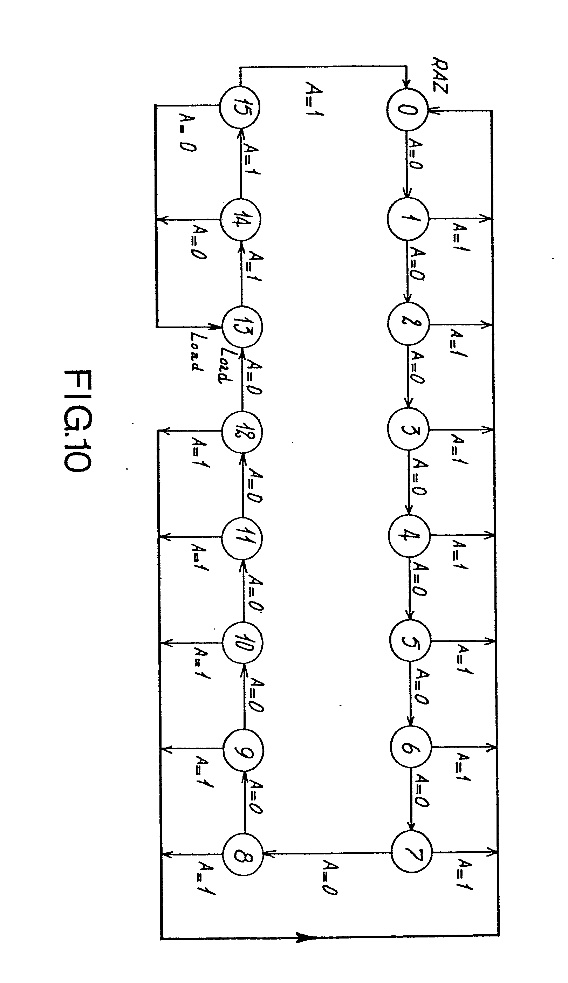

Le schéma de la Fig. 9 montre plus en détail l'adaptateur 40 et le circuit 81. Le circuit 76 comprend un décompteur synchrone 84, une mémoire 85, un compteur binaire 86 à quatre étages, une mémoire PROM 87 et une porte OU 88. La mémoire 85 contient la longueur N des blocs, c'est à dire le nombre maximal d'éléments binaires des paquets, plus le motif de synchronisation, plus un nombre prédéterminé d'éléments binaires qui représente l'intervalle entre la fin d'un paquet et le motif de synchronisation suivant. Dans l'exemple décrit, ce nombre prédéterminé est égal à un. La mémoire 85 est évidemment modifiable en cas de changement dans le système de transmission à cet égard. La mémoire 85 est reliée à l'entrée de chargement du décompteur 84. La sortie «0» du décompteur 84 est reliée à une entrée de la porte OU 88 dont la sortie est reliée à l'entrée de déclenchement de chargement du décompteur 84. La sortie «0» de 84 est également reliée à une entrée d'adresse A5 de la mémoire PROM 87. L'entrée d'horloge du décompteur 84 est reliée à la sortie H d'horloge binaire du circuit 81.

Le compteur 86 a ses quatre sorties Q0 à Q3 respectivement reliées à quatre entrées d'adresses A0 à A3 de la mémoire PROM 87. Trois sorties D0 de 87 sont respectivement reliées aux entrées de remise à zéro RAZ, d'horloge et de chargement CH du compteur 86. Une quatrième sortie D3 de la mémoire PROM 87 est reliée à la seconde entrée de la porte OU 88. Enfin la mémoire PROM a une entrée A4 reliée à la sortie d'une porte ET 89 du circuit 77.

Le fonctionnement de la boucle numérique 76 sera décrit ci-dessous en relation avec l'organigramme de la Fig. 10, dans lequel les contenus des cercles correspondent aux états du compteur 86 et la variable A est définie comme suit:
— à chaque état «0» à «12» et «14» et «15», la valeur de A est celle de A4 quand A5 est à «1», et
— à l'état «13», la valeur de A est celle de A4, quelle que soit la valeur de A5.

L'entrée A4 est à «1» chaque fois que le motif de synchronisation ou son inverse est reconnu dans le circuit 77 et l'entrée A5 est à «1» à chaque passage par zéro du décompteur 84.

L'état «0» du compteur 86 correspond au cas du fonctionnement synchrone correct où A4 et A5 sont simultanément à «1» à chaque début de bloc de transmission. Si l'on suppose qu'au moment où A5 est à «1», A4 n'est plus à «1», c'est-à-dire $A = 0$, une impulsion d'horloge est envoyée par la sortie D1 de la PROM 87 à l'entrée d'horloge de 86 qui passe à l'état «1». A la période suivante du décompteur 84, quand A5 est à «1», si A4 est à «1», la sortie D0 de 87 remet à zéro le compteur 86, mais si A4 est encore à «0», la sortie D1 transmet une autre impulsion d'horloge qui fait passer le compteur 86 à «2», et ainsi de suite jusqu'à ce que le compteur 86 atteigne l'état «12» ou revienne à l'état «0». Quand on a atteint le compte «12» dans le compteur 86, si, quand A5 est à «1», A4 est à «1», 86 repasse à l'état «0», sinon la sortie D2 transmet un signal de chargement au compteur 86 qui prend l'état «13». Le synchronisme est considéré comme perdu et la boucle fonctionne alors en mode de recherche de synchronisation. A partir de cet instant, quand l'entrée A4 passe à «1», l'état de A5 étant indifférent, la PROM 87 fait avancer le compteur 86 à l'état «14» et, par D3, fait effectuer le chargement du décompteur 84. A l'état «14», quand A5 est à «1», si A4 est à «0», la PROM fait recharger le compteur 86 à «13», mais si A4 est aussi à «1», elle fait passer 86 à l'état «15». A la période suivante, 86 passe à l'état «0» ou à l'état «13» comme l'indique l'organigramme.

Le circuit 77 comprend deux registres à décalages 90 et 91, montés en série, et deux mémoires PROM 92 et 93, ainsi qu'une porte OU 94 et la porte ET 89.

Le registre 90 a son entrée série reliée à la sortie de données binaires du démodulateur 39 et sa sortie série reliée à l'entrée série du registre 91. Les sorties parallèles du registre 90 sont reliées aux entrées d'adresse de la mémoire PROM 92, tandis que les sorties parallèles du registre 91 sont reliées aux entrées d'adresse de la mémoire PROM 93. La mémoire 92 comporte deux sorties D4 et D5 qui sont respectivement à «1» selon que l'octet présent dans le registre 90 correspond directement à l'octet de synchronisation octet ou à son inverse. La mémoire 93 a une sortie D6 qui est à «1» chaque fois que l'octet présent dans le registre 91 correspond à l'octet de synchronisation éléments binaires et à son inverse. Les sorties D4 et D5 sont respectivement reliées aux deux entrées de la porte OU 94 dont la sortie est reliée à une des deux entrées de la porte ET 89. La sortie D6 de la mémoire 93 est reliée à la seconde entrée de la porte ET 89.

Le circuit de levée d'ambiguïté 78 comprend une bascule 95 et une porte OU-exclusif 96. La bascule 95 est une bascule RS dont l'entrée R est reliée à la sortie D4 de la mémoire 92 tandis que l'entrée P est reliée à la sortie D5 de 92. L'entrée de déclenchement EN de la bascule 95 est reliée à la sortie D0 de la mémoire 87 de 76 et sa sortie Q est reliée à une entrée de la porte OU-exclusif 96 dont la seconde entrée est reliée à la sortie série du registre 91.

Quand les deux octets du motif de synchronisation sont dans les registres 90 et 91, les sorties D6 et D4 des mémoires 93 et 92 sont à l'état «1», donc la sortie de la porte OU 94 et celle de la porte ET sont à «1», ce qui entraîne A4 = 1. Si l'octet correspondant à l'octet de synchronisation «octet», mais avec polarité inverse, apparaît dans le registre 90, alors que l'octet de synchronisation «élément binaire» est dans 91, les sorties D6 et D5 de 93 et 92 passent à l'état «1», ce qui se traduit encore par A4 = 1. Par ailleurs, l'entrée P de la bascule 95 est à «1», si bien que la sortie Q de 95 change d'état, quand la sortie D0 de 86, qui est reliée à l'entrée EN de 95, passe à «1», c'est à dire au début du paquet. Il en résulte qu'à la sortie de la porte OU-exclusif 96, on a une inversion de polarité. Cette inversion de polarité permet d'espérer une comparaison positive au début de la période suivante.

La base de temps 80 comprend un compteur binaire à huit étages 97 et une mémoire PROM 98. Le compteur 97 a son entrée d'horloge reliée à la sortie H d'horloge binaire du circuit 81, son entrée de remise à zéro RAZ reliée à une sortie prédéterminée D7 du décompteur 84 et ses sorties parallèles de compte reliées aux entrées d'adresse de la mémoire 98. Dans un exemple préféré de réalisation, la sortie D7 de 84 correspond à sa sortie de compte «40». Ainsi, le compteur 97 est remis à zéro cinq octets avant la fin de chaque paquet. Ce nombre de cinq octets pourraient être réduit à trois ou être augmenté, toutefois il semble constituer un bon compromis. La sortie MAX de 97 est reliée à son entrée EN afin de bloquer le compteur dès qu'il a compté 256 éléments binaires, puisqu'il n'est utile qu'au début de chaque bloc.

La mémoire PROM 98 a deux sorties D8 et D9 reliées au circuit 81, une sortie D10 reliée au fil VAL et une sortie D11 reliée à l'entrée de déclenchement du générateur de séquence pseudo-aléatoire 82.

Le circuit de récupération d'horloge binaire 81 comprend un interrupteur 99 dont l'entrée de données est reliée à la sortie du détecteur 38 et dont la sortie est reliée à l'entrée d'un filtre à un pôle à bande étroite 100. La sortie du filtre 100 est reliée à la première entrée d'un comparateur 101 dont la seconde entrée est reliée à la sortie D9 de la mémoire PROM 98. La sortie du comparateur 101 est reliée à l'entrée de remise en phase d'un diviseur de fréquence 102 dont l'entrée de signal est reliée à un oscillateur à quartz 102. La fréquence de l'oscillateur 103 est égale à n fois la fréquence élément binaire. Le comparateur 101 peut être un amplificateur opérationnel dont une entrée est reliée à la sortie du filtre 100 et dont l'autre entrée est reliée à D9. La sortie D9 applique pendant tout le temps un potentiel de blocage au comparateur 101, sauf pendant un cours instant qui correspond aux derniers éléments binaires de l'octet de synchronisation «élément binaire» du motif de synchronisation du bloc de transmission, c'est à dire quand l'enveloppe du signal délivré par le filtre 100 doit avoir dépassé un certain seuil. Le signal de sortie du comparateur 101 constitue donc une fenêtre pour le diviseur 102 qui est rechargé, une fois la fenêtre ouverte, dès la première transition du signal de sortie du filtre 100, ce qui assure la remise en phase.

Par ailleurs, le filtre doit être mis au repos pendant la partie utile du paquet de données afin de ne pas perturber sa réponse à l'apparition de la salve de synchronisation «éléments binaires». C'est pourquoi l'interrupteur analogique 99 a son entrée de commande reliée à la sortie D8 de la mémoire 98, cette sortie D8 n'étant rendue active que quelques éléments binaires avant la fin d'un paquet.

La sortie D11 est active à un instant prédéterminé suivant le début d'un bloc pour déclencher le générateur 82 de manière qu'il commence à délivrer sa séquence pseudo-aléatoire au moment où le 17e élément binaire du bloc apparaît à l'entrée de la porte OU-exclusif 83. La sortie D10 est active à un moment prédéterminé pour envoyer le signal VAL aux démultiplexeurs. Le diviseur 102 délivre la synchronisation élément binaire sur le fil H.

Bien entendu, la programmation de la mémoire PROM 98 permet de choisir ces instants prédéterminés d'activation des sorties D8 à D11 pour obtenir le fonctionnement le plus satisfaisant.

## Revendications

1. Système de transmission de paquets de données numériques ordonnées en octets sur un canal à débit continu, les paquets de données (Bi) étant individuellement inclus dans des blocs de transmission (Pi) dont les débuts sont émis périodiquement, la période d'émission des débuts de blocs de transmission (Pi) étant au moins égale à la longueur maximale d'un bloc de transmission, caractérisé en ce que le début de chaque bloc de transmission (Pi) comprend un motif de synchronisation (Ei) constitué par un octet de synchronisation «élément binaire» et un octet de synchronisation «octet».

2. Système suivant la revendication 1, dans lequel l'octet de synchronisation «élément binaire» est 10101010, caractérisé en ce que l'octet de synchronisation «octet» correspond, en notation hexadécimale à E7, B4 ou 2D.

3. Récepteur de paquets de données transmis suivant le système de la revendication 1 ou 2, comprenant des circuits de traitement de données démodulées (41.1 à 41.n) et un circuit de recherche de synchronisation (40) comprenant une mémoire permanente (60, 61) de motif de synchronisation, un registre à décalage (57, 58) d'une capacité de deux octets à l'entrée duquel sont appliqués les signaux binaires démodulés, un comparateur (53, 54) dont les premières entrées sont reliées aux sorties de la mémoire permanente (60, 61) et les secondes entrées aux sorties parallèles du registre à décalage (57, 58), caractérisé en ce que, dans le circuit de recherche de synchronisation (40), la sortie du comparateur (53, 54) est reliée à une entrée d'une porte OU (48), un premier compteur (46) d'une capacité égale à (I–1) éléments binaires dont l'entrée de comptage est reliée à la sortie (44) de l'horloge «élément binaire» et dont la sortie de débordement («0») est reliée à la seconde entrée de la porte OU (48) et, d'autre part, à l'entrée d'initialisation d'un second compteur (47) d'une capacité de l'ordre de deux octets dont l'entrée de comptage est reliée à l'horloge élément binaire et dont la sortie de débordement («0») est reliée à l'entrée d'activation du comparateur (53, 54), la sortie de la porte OU (48) étant reliée à l'entrée d'initialisation du premier compteur (46), la sortie du second compteur (47) délivrant le signal de validation de la transmission (VAL) vers les circuits de traitement (41.1 à 41.n), les données étant délivrées à la sortie du registre à décalage (57, 58) vers les circuits de traitement (41.1 à 41.n).

4. Récepteur suivant la revendication 3, caractérisé en ce que ladite mémoire permanente est formée d'une première (60) et d'une seconde (61) mémoire, ledit comparateur est formé d'un premier (53) et un second (54) comparateur, et ledit registre à décalage d'un premier (58) et d'un second (57) registre reliés en série, la première mémoire (60) contenant l'octet 10101010 et la seconde (61) l'octet de synchronisation «octet», le récepteur comprenant encore un troisième comparateur (55) dont les premières entrées sont reliées, à travers des inverseurs (62), aux sorties de la seconde mémoire (61) et dont les secondes entrées sont reliées aux second registre (57), avec l'entrée d'activation reliée à la sortie du second compteur (47), les sorties des premier (53) et second (54) comparateurs étant reliées aux entrées d'une porte ET (63) dont la sortie est reliée à la première entrée de la porte OU (48), la sortie du troisième comparateur (55) étant reliée à l'entrée d'un circuit d'inversion (64, 66) de polarité des éléments binaires reçus.

5. Récepteur de paquets de données transmis suivant le système de la revendication 1 ou 2, comprenant des circuits de traitement de données démodulées (41.1 à 41.n) et un circuit de recherche de synchronisation (40) comprenant une mémoire permanente de motif de synchronisation (92, 93), un registre à décalage (90, 91) d'une capacité de deux octets à l'entrée duquel sont appliqués les signaux binaires démodulés, caractérisé en ce que, dans le circuit de recherche de synchronisation (40), ledit registre à décalage comprend deux registres à décalage (90, 91), montés en série, et ladite mémoire comprend deux mémoires PROM (92, 93), les sorties parallèles des deux registres à décalage (90, 91) étant respectivement reliées aux entrées d'adresse des deux mémoires PROM (92, 93), les deux sorties respectives des deux mémoires PROM (92, 93) étant respectivement reliées aux entrées d'une porte ET (89) dont la sortie est reliée à une entrée d'adresse d'une troisième mémoire PROM (87) ayant un premier jeu de sorties respectivement reliées aux entrées de remise à zéro, d'horloge et de chargement d'un compteur binaire (86) à p étages et une seconde sortie reliée à la première entrée d'une porte OU (88), les sorties du compteur binaire (86) à p étages étant reliées aux entrées d'adresse correspondantes de ladite troisième mémoire PROM (87), la sortie de ladite porte OU (88) étant reliée à l'entrée de commande de chargement d'un décompteur (84) dont les entrées de chargement sont reliées aux sorties d'une mémoire (85) de longueur de bloc et dont la sortie «0» est reliée à la seconde entrée de la porte OU (88) et à une entrée d'adresse de ladite mémoire PROM (87), ledit décompteur (84) ayant une sortie prédéterminée reliée à une base de temps (80) qui délivre un signal de validation (VAL) vers les circuits de traitement (41.1 à 41.n), les données étant délivrées à la sortie du registre à décalage (91) vers les circuits de traitement (41.1 à 41.n).

6. Récepteur suivant la revendication 5, utilisable quand les données du paquet ont été embrouillées à l'émission, caractérisé en ce qu'il comprend un générateur de séquence pseudo-aléatoire (82) dont l'entrée de déclenchement est reliée à une sortie de ladite base de temps (80) et dont la sortie est reliée à une entrée d'une porte OU-exclusif (83) dont la seconde entrée est reliée à la sortie série dudit second registre à décalage (91) et dont la sortie délivre le paquet des données utiles vers les circuits de traitement (41.1 à 41.n).

7. Récepteur suivant la revendication 6, caractérisé en ce que la première mémoire PROM (92) associée au premier registre à décalage (90) a deux sorties qui sont respectivement activées en fonction de la polarité de l'octet de synchronisation «octet» présent dans ledit premier registre à décalage (90), les deux sorties étant respectivement reliées aux deux entrées d'une seconde porte OU (94) dont la sortie est reliée à une entrée de ladite porte ET (89), une desdites deux sorties étant reliée à l'entrée R d'une bascule RS (95) et l'autre à l'entrée P de celle-ci, l'entrée d'activation EN de la bascule RS (95) étant reliée à une sortie de ladite troisième mémoire PROM (87) et sa sortie Q étant reliée à une entrée d'une seconde porte OU-exclusif (96) dont la seconde entrée est reliée à la sortie série dudit second registre à décalage (91) et dont la sortie est reliée à la seconde entrée de ladite première porte OU-exclusif (83).

## Claims

1. A transmission system for transmitting packets of digital data arranged into bytes on a continuous-flow channel, the data packets (Bi) being individually inserted into transmission blocks (Pi) the beginnings of which are periodically transmitted, the period of the transmission of the beginnings of transmission blocks (Pi) being at least equal to the maximum length of a transmission block, characterized in that the beginning of each transmission block (Pi) comprises a synchronization pattern (Ei) constituted by a "bit" synchronization byte and a "byte" synchronization byte.

2. A system according to claim 1, wherein the "bit" synchronization byte is 10101010, characterized in that the "byte" synchronization byte corresponds to E7, B4 or 2D, in hexadecimal notation.

3. A receiver of data packets transmitted according to the system of claim 1 or 2, having demodulated data processing circuits (41.1–41.n) and a synchronization searching circuit (40) comprising a permanent memory (60, 61) for storing the synchronization pattern, a shift register (57, 58) having a capacity of two bytes, the demodulated binary signals being applied to the input of said shift register, a comparator (53, 54) the first inputs of which are connected from the outputs of the permanent memory (60, 61) and the second inputs of which are connected from the parallel outputs of the shift register (57, 58), characterized in that, in the synchronization searching circuit (40), the output of the comparator (53, 54) is connected to an input of an OR gate (48), a first counter (46) having a capacity equal to (I–1) bits the count input of which is connected from the output (44) of the "bit" clock and the overflow output ("0") of which is connected to the second input of the OR gate (48) and, on the other hand, to the load input of a second counter (47) having a capacity of about two bytes the count input of which is connected from the "bit" clock and the overflow output of which ("0") is connected to the enable input of the comparator (53, 54), the output of the OR gate (48) being connected to the load input of the first counter (46), the output of the second counter (47) delivering the enable transmission signal (VAL) towards the processing circuits (41.1–41.n), the data being delivered from the output of the shift register (57, 58) towards the processing circuits (41.1–41.n).

4. A receiver according to claim 3, characterized in that said permanent memory is comprised of a first memory (60) and a second memory (61), said comparator is comprised of a first comparator (53) and a second comparator (54) and said shift register is comprised of a first register (58) and a second register (57) connected in series, the first memory (60) storing the byte 10101010 and the second one (61) the "byte" synchronization byte, the receiver still comprising a third comparator (55) the first inputs of which are connected, through inverters (62), from the outputs of the second memory (61) and the second inputs of which are connected from the second register (57), with the enable input connected from the output of the second counter (47), the outputs of the first (53) and second (54) comparators being connected to the inputs of an AND gate (63) the output of which is connected to the first input of the OR gate (48), the output of the third comparator (55) being connected to the input of an inverter circuit (64, 66) for inverting the polarity of the received bits.

5. A receiver of data packets transmitted according to the system of claim 1 or 2, comprising processing circuits (41.1–41.n) for processing demodulated data and a synchronization searching circuit (40) comprising a permanent memory storing the synchronization pattern (92, 93), a shift register (90, 91) having a capacity of two bytes, the demodulated binary signals being applied to the input of the shift register, characterized in that, in the synchronization searching circuit (40), said shift register is comprised of two serially mounted shift registers (90, 91), and said memory is comprised of two PROM memories (92, 93) the parallel outputs of the two shift registers (90, 91) being respectively connected to the address inputs of the two PROM memories (92, 93), the respective two outputs of the two PROM memories (92, 93) being respectively connected to the inputs of an AND gate (89) the output of which is connected to an address input of a third PROM memory (87) having a first set of outputs respectively connected to the reset, clock and load inputs of a p-stages binary counter (86) and a second output connected to the first input of an OR gate (88), the outputs of the p-stages binary counter (86) being connected to the corresponding address inputs of said third PROM memory (87), the output of said OR gate (88) being connected to the control input for controlling the loading of a down-counter (84) the load inputs of which are connected from the outputs of a memory (85) storing the block length value and the output "0" of which is connected to the second input of the OR gate (88) and an address input of said PROM memory (87), said down-counter (84) having a predetermined output connected to a time base (80) which delivers an enable signal (VAL) towards the processing circuits (41.1–41.n), the data being delivered from the output of the shift register (91) towards the processing circuits (41.1–41.n).

6. A receiver according to claim 5, usable when the data of the packet have been scrambled for the transmission, characterized in that it comprises a pseudo-random sequence generator (82) the trigger input of which is connected from an output of said time base (80) and the output of which is connected to an input of an exclusive OR gate (83) the second input of which is connected from the series output of said second shift register (91) and the output of which delivers the packet of useful data towards the processing circuits (41.1–41.n).

7. A receiver according to claim 6, characterized in that the first PROM memory (92) associated to the first shift register (90) has two outputs which are respectively enabled depending on the polarity of the "byte" synchronization byte present in said first shift register (90), the two outputs being respectively connected to the two inputs of a second OR gate (94) the output of which is connected to an input of said AND gate (89), one of said two outputs being connected to the input R of an RS flip-flop (95) and the other one to the input P thereof, the enable input EN of the RS flip-flop (95) being connected from an output of said third PROM memory (87) and its output Q being connected to one input of a second exclusive OR gate (96) the second input of which is connected from the series output of said second shift register (91) and the output of which is connected to the second input of said first exclusive OR gate (83).

**Patentansprüche**

1. System zur Übertragung von in Bytes angeordneten Paketen von digitalen Daten über einen Kanal mit kontinuierlichem Datenfluss, wobei die Datenpakete (Bi) einzeln in Übertragungsblöcke (Pi) eingeschlossen sind, deren Anfänge periodisch ausgesendet werden, wobei die Aussendeperiode für die Anfänge der Übertragungsblöcke (Pi) wenigstens gleich der maximalen Länge eines Übertragungsblocks ist, dadurch gekennzeichnet, dass der Anfang jedes Übertragungsblocks (Pi) ein Synchronisationsschema (Ei) umfasst, das durch ein «bit» Synchronisations-Byte und ein «Byte» Synchronisations-Byte gebildet wird.

2. System nach Anspruch 1, bei dem das «bit» Synchronisations-Byte 10101010 ist, dadurch gekennzeichnet, dass das «Byte» Synchronisations-Byte E7, B4 oder 2D in hexadezimaler Notation entspricht.

3. Empfänger von Datenpaketen, die nach dem System von Anspruch 1 oder 2 übertragen werden, der Verarbeitungsschaltungen (41.1 bis 41.n) für die demodulierten Daten und eine Synchronisations-Suchschaltung (40) umfasst, die einen Permanentspeicher (60, 61) für das Synchronisationsschema, ein Schieberegister (57, 58) mit einer Kapazität von zwei Bytes, dessen Eingang die demodulierten Binärsignale zugeführt werden, eine Vergleichsschaltung (53, 54), deren erste Eingänge mit den Ausgängen des Permanentspeichers (60, 61) verbunden sind, und deren zweite Eingänge mit den parallelen Ausgängen des Schieberegisters verbunden sind, enthalten, dadurch gekennzeichnet, dass in der Synchronisations-Suchschaltung (40) der Ausgang der Vergleichsschaltung (53, 54) mit einem Eingang eines ODER-Tors (48) verbunden ist, dass ein erster Zähler (46) vorgesehen ist, der eine Kapazität von (I–1) bits hat, dessen Zähleingang mit dem Ausgang (44) des «bit»-Taktgebers und dessen Überflussausgang («0») mit dem zweiten Eingang des ODER-Tors (48) und andererseits mit dem Auslöseeingang eines zweiten Zählers (47) mit einer Kapazität von etwa zwei Bytes verbunden ist, dessen Zähleingang mit dem bit-Taktgeber und dessen Überflussausgang («0») mit dem Aktivierungseingang der Vergleichsschaltung (53, 54) verbunden ist, wobei der Ausgang des ODER-Tors (48) mit dem Auslöseeingang des ersten Zählers (46) verbunden ist, wobei der Ausgang des zweiten Zählers (47) das Freigabesignal (VAL) für die Übertragung zu den Verarbeitungsschaltungen (41.1 bis 41.n) liefert, wobei die Daten vom Ausgang des Schieberegisters (57, 58) den Verarbeitungsschaltungen (41.1 bis 41.n) zugeführt werden.

4. Empfänger nach Anspruch 3, dadurch gekennzeichnet, dass der genannte Permanentspeicher durch einen ersten (60) und einen zweiten Speicher (61) gebildet wird, dass die genannte Vergleichsschaltung aus einer ersten (53) und aus einer zweiten Vergleichsschaltung (54) gebildet wird und das genannte Schieberegister aus einem ersten (58) und einem damit in Reihe geschalteten zweiten Register, dass der erste Speicher (60) das Byte 10101010 und der zweite (61) das «Byte» Synchronisations-Byte enthält, dass der Empfänger noch eine dritte Vergleichsschaltung (55) enthält, deren erste Eingänge über Inverter (62) mit den Ausgängen des zweiten Speichers (61) verbunden sind, und deren zweite Eingänge mit dem zweiten Register (57) verbunden sind, wobei der Aktivierungseingang mit dem Ausgang des zweiten Zählers (47) verbunden ist, wobei die Ausgänge der ersten (53) und der zweiten Vergleichsschaltung (54) mit den Eingängen eines UND-Tors (63) verbunden sind, dessen Ausgang mit dem ersten Eingang des ODER-Tors (48) verbunden ist, wobei der Ausgang der dritten Vergleichsschaltung (55) mit dem Eingang einer Inverterschaltung (64, 66) für die Polarität der empfangenen bits verbunden ist.

5. Empfänger von Datenpaketen, die nach dem System von Anspruch 1 oder 2 empfangen werden, der Verarbeitungsschaltungen (41.1 bis 41.n) für die demodulierten Daten und eine Synchronisations-Suchschaltung (40) umfasst, die einen Permanentspeicher (92, 93) für das Synchronisationsschema, ein Schieberegister (90, 91) mit einer Kapazität von zwei Bytes, dessen Eingang die demodulierten Binärsignale zugeführt werden, enthält, dadurch gekennzeichnet, dass in der Synchronisations-Suchschaltung (40) das genannte Schieberegister zwei in Reihe geschaltete Schieberegister (90, 91) umfasst und der genannte Speicher zwei PROM-Speicher (92, 93) umfasst, dass die parallelen Ausgänge der beiden Schieberegister (90, 91) jeweils mit den Adresseneingängen der beiden PROM-Speicher (92, 93) verbunden sind, dass die entsprechenden beiden Ausgänge der beiden PROM-Speicher (92, 93) jeweils mit den Eingängen eines UND-Tors (89) verbunden sind, dessen Ausgang mit einem Adresseneingang eines dritten PROM-Speichers (87) verbunden ist, der eine erste Gruppe von Ausgängen, die jeweils mit den Rückstell-, Takt- und Ladeeingängen eines p-stufigen Binärzählers (86) verbunden sind, und einen zweiten Ausgang, der mit dem ersten Eingang eines ODER-Tors (88) verbunden ist, besitzt, dass die Ausgänge des p-stufigen Binärzählers (86) mit den entsprechenden Adresseneingängen des genannten dritten PROM-Speichers (87) verbunden sind, dass der Ausgang des genannten ODER-Tors (88) mit dem Eingang zur Steuerung des Ladens eines Abwärtszählers (84) verbunden ist, dessen Ladeeingänge mit den Ausgängen eines Speichers (85) für die Blocklänge verbunden sind, und dessen Ausgang «0» mit dem zweiten Eingang des ODER-Tors (88) und mit einem Adresseneingang des genannten PROM-Speichers (87) verbunden ist, dass der genannte Abwärtszähler (84) einen vorgegebenen Ausgang hat, der mit einer Zeitbasis (80) verbunden ist, die ein Freigabesignal (VAL) an die Verarbeitungsschaltungen (41.1 bis 41.n) liefert, wobei die Daten vom Ausgang des Schieberegisters (91) den Verarbeitungsschaltungen (41.1 bis 41.n) zugeführt werden.

6. Empfänger nach Anspruch 5, der verwendbar ist, wenn die Daten des Pakets für die Aussendung durcheinandergewürfelt worden sind, dadurch gekennzeichnet, dass dieser einen Pseudo-Zufalls-Folgegenerator (82) enthält, dessen Auslöseeingang mit einem Ausgang der genannten Zeitbasis (80) verbunden ist, und dessen Ausgang mit einem Eingang eines Exklusiv-ODER-Tors (83) verbunden ist, dessen zweiter Eingang mit dem Serienausgang des genannten Schieberegisters (91) verbunden ist, und dessen Ausgang das Paket von brauchbaren Daten den Verarbeitungsschaltungen (41.1 bis 41.n) zuführt.

7. Empfänger nach Anspruch 6, dadurch gekennzeichnet, dass der dem ersten Schieberegister (90) zugeordnete PROM-Speicher (92) zwei Ausgänge hat, die jeweils in Abhängigkeit von der Polarität des «Byte» Synchronisations-Bytes aktiviert werden, die in dem genannten ersten Schieberegister (90) vorhanden ist, dass die beiden Ausgänge jeweils mit den beiden Eingängen eines zweiten ODER-Tors (94) verbunden sind, dessen Ausgang mit einem Eingang des genannten UND-Tors (89) verbunden ist, dass einer der beiden genannten Ausgänge mit einem Eingang R eines RS-Flipflop (95) und der andere mit dessen Eingang P verbunden ist, dass der Aktivierungseingang EN des RS-Flipflop (95) mit einem Ausgang des genannten dritten PROM-Speichers (87) verbunden ist und sein Ausgang Q mit einem Eingang eines zweiten Exklusiv-ODER-Tors (96) verbunden ist, dessen zweiter Eingang mit dem Serienausgang des genannten zweiten Schieberegisters (91), und dessen Ausgang mit dem zweiten Eingang des genannten ersten Exklusiv-ODER-Tors (83) verbunden ist.

FIG.1

| $P_1$ |
| --- |
| $E_{11}$ | $D_{11}$ |

----

| $P_2$ |
| --- |
| $E_{12}$ | $D_{12}$ |

| $P_3$ |
| --- |
| $E_{21}$ | $D_{21}$ |

----

| $P_4$ |
| --- |
| $E_{13}$ | $D_{13}$ |

----

FIG.2

FIG.3

0 044 780

# FIG.4

# FIG.6

# FIG.5

0 044 780

## FIG.7

FIG.8

FIG.9

0 044 780

FIG.10